## Europäisches Patentamt
## European Patent Office
## Office européen des brevets

(11) Veröffentlichungsnummer: **0 240 969 B1**

# EUROPÄISCHE PATENTSCHRIFT

(45) Veröffentlichungstag der Patentschrift: **12.08.92**

(21) Anmeldenummer: **87105056.3**

(22) Anmeldetag: **06.04.87**

(51) Int. Cl.⁵: **B60S 5/04**

---

(54) **Reifenfüllgerät, insbesondere zum Füllen von Fahrradreifen.**

---

(30) Priorität: **09.04.86 DE 8609642 U**

(43) Veröffentlichungstag der Anmeldung:
**14.10.87 Patentblatt 87/42**

(45) Bekanntmachung des Hinweises auf die
Patenterteilung:
**12.08.92 Patentblatt 92/33**

(84) Benannte Vertragsstaaten:
**AT BE CH DE ES FR GB GR IT LI LU NL SE**

(56) Entgegenhaltungen:
**EP-A- 0 022 258**
**DE-A- 3 205 264**
**GB-A- 833 056**

(73) Patentinhaber: **Moser, Wilfried**
**Weissdornweg 10**
**W-6368 Bad Vilbel 5(DE)**

(72) Erfinder: **Kurz, Reinhard**
**Niddertalstrasse 59**
**W-6369 Nidderau 4(DE)**
Erfinder: **Kroh, Wilfried**
**Taunusblick 8**
**W-6367 Karben 4(DE)**

(74) Vertreter: **Haar, Lucas H., Dipl.-Ing. Patentanwalt**
**Königsberger Strasse 23**
**W-6360 Friedberg/Hessen 1(DE)**

---

## Beschreibung

Die Erfindung betrifft ein Reifenfüllgerät, insbesondere zum Füllen von Fahrradreifen, bestehend aus einem Füllkopf mit einer an das Reifenventil anschließbaren Auslaßöffnung und einer Einlaßöffnung für eine Druckgaspatrone und aus einer konzentrisch zur Einlaßöffnung mit dem Füllkopf verbindbaren Patronenhülse zur Aufnahme der Druckgaspatrone, wobei der Verbindungskanal zwischen der Einlaßöffnung und der Auslaßöffnung des Füllkopfes ein Ventil enthält, das in seiner Schließstellung den Verbindungskanal sperrt und das über eine am Füllkopf angeordnete Betätigungsvorrichtung in seine Offenstellung bewegbar ist.

Reifenfüllgeräte dieser Art sind an Stelle der üblichen Handluftpumpen verwendbar und sollen ein schnelles und müheloses Aufpumpen eines Fahrradreifens mit einem verhältnismäßig hohen Druck ermöglichen. Insbesondere für Radrennfahrer sind daher derartige Reifenfüllgeräte von besonderem Vorteil.

Aus der dem Oberbegriff des Anspruchs 1 entsprechenden EP-A-0 022 258 ist ein Reifenfüllgerät der angegebenen Art bekannt, welches eine auswechselbare Gasdruckpatrone enthält, wobei der Anschluß der Gasdruckpatrone mittels Schraubgewinde oder durch Einpressen erfolgen kann.

Es ist weiterhin aus der DE-A-3 205 264 ein Reifenfüllgerät bekannt, bei dem die Einlaßöffnung des Füllkopf einen Hohldorn enthält, mit dem das Verschlußblech einer in die Patronenhülse eingelegten Druckgaspatrone beim Aufschrauben der Patronenhülse auf den Füllkopf durchstochen wird. Dieses Reifenfüllgerät enthält kein Ventil, so daß die in einer Druckgaspatrone gespeicherte Gasmenge bei jedem Gebrauch vollständig entweicht und mit einer Druckgaspatrone jeweils nur ein Reifen aufgebraucht werden kann.

Der Erfindung liegt die Aufgabe zugrunde, ein Reifenfüllgerät der eingangs genannten Art zu schaffen, das die Verwendung von Einweg-Druckgaspatronen ermöglicht, die mit einer durchstechbaren Stirnwand verschlossen sind, und das ein hohes Maß an Sicherheit bei der Handhabung bietet.

Diese Aufgabe wird erfindungsgemäß dadurch gelöst, daß

i) die Einlaßöffnung einen Hohldorn enthält, wobei das Ende des Verbindungskanals zur Aufnahme des Hohldorns und des Halses der Druckgaspatrone erweitert ist, daß

ii) das Ventil selbsttätig schließend ist, und daß

iii) die Patronenhülse eine Entlüftungsbohrung aufweist, durch die ihr Innenraum mit der Atmosphäre verbunden ist.

Das erfindungsgemäße Reifenfüllgerät vermeidet unerwünschte Druckgasverluste und gewährleistet eine sichere Handhabung. So wird durch das selbsttätig schließende Ventil sichergestellt, daß beim Einsetzen und Öffnen einer neuen Druckgaspatrone durch eine falsche Stellung des Ventils nicht versehentlich Druckgas entweicht. Weiterhin wird sichergestellt, daß bei einem Losschrauben der Patronenhülse vor dem vollständigen Entleeren der Druckgaspatrone das Druckgas durch die Entlüftungsbohrung in der Patronenhülse entweichen kann, bevor der Füllkopf und die Patronenhülse vollständig voneinander getrennt sind. Somit kann sich in der Patronenhülse kein Druckpolster bilden, welches beim Lösen der Verbindung den Füllkopf und die Patronenhülse explosionsartig auseinandertreiben und dadurch Verletzungen hervorrufen könnte.

Zu einer sicheren Handhabung kann erfindungsgemäß weiterhin beitragen, daß die Patronenhülse eine Halterung aufweist, durch die die Druckgaspatrone in der Patronenhülse arretierbar ist. Mit Hilfe dieser Halterung wird beim Lösen der Patronenhülse die Druckgaspatrone zuverlässig aus dem Füllkopf herausgezogen, so daß ein vorhandener Restdruck in jedem Fall über die Entlüftungsbohrung abgebaut wird.

Nach einem weiteren Vorschlag der Erfindung ist das Ventil ein von außen in den Verbindungskanal einschraubbares Reifenfüllventil, das durch einen die Einschrauböffnung druckdicht verschließenden Stößel von außen betätigbar ist. Reifenfüllventile haben sich in der Praxis bewährt und werden in großer Stückzahl preisgünstig hergestellt. Das erfindungsgemäße Reifenfüllgerät macht sich diese Vorteile zunutze. Weiterhin ergibt sich bei der erfingungsgemäßen Ausgestaltung der Vorteil, daß das Reifenfüllventil bei einer Störung nach dem Entfernen des Stößels leicht herausgeschraubt und gereinigt bzw. ausgetauscht werden kann.

In einer bevorzugten Ausgestaltung des erfindungsgemäßen Reifenfüllgeräts besteht der Füllkopf aus einem zylindrischen Gehäuse mit einer zentralen, gestuften Durchgangsbohrung, deren Mittelabschnitt einen Dichtkegel und ein Innengewinde zur Aufnahme des Reifenfüllventils aufweist, deren eines Ende zur Aufnahme des Hohldornes und des Halses der Druckgaspatrone erweitert ist und deren anderes Ende den Stößel zur Betätigung des Reifenfüllventils aufnimmt. Eine derartige Ausgestaltung des Füllkopfes ist mit geringem Aufwand herstellbar und ermöglicht eine einheitliche Gestaltung von Füllkopf und Patronenhülse.

Eine zuverlässige Abdichtung zwischen Druckgaspatrone und Füllkopf wird nach einem weiteren Vorschlag der Erfindung dadurch erreicht, daß das den Hohldorn aufnehmende, erweiterte Ende der Durchgangsbohrung in einer eingestochenen Ringnut einen Dichtring enthält, in den der Hals der Druckgaspatrone vor dem Aufstechen durch den Hohldorn eingreift.

Zur Verbindung der Durchgangsbohrung mit der Auslaßöffnung zweigt zwischen dem Ventil und dem Stößel eine Querbohrung von der Durchgangsbohrung ab, die an ihrem äußeren Ende eine die Auslaßöffnung enthaltende Anschlußverschraubung aufweist.

Die Betätigung des Stößels erfolgt erfindungsgemäß durch einen Hebel, der an der Stirnseite des Füllkopfes gelagert ist und einen sich auf der der Anschlußverschraubung abgekehrten Seite längs der zylindrischen Außenfläche des Füllkopfes erstreckenden Hebelarm aufweist. Diese Anordnung ermöglicht eine einfache Handhabung des erfindungsgemäßen Reifenfüllgeräts mit einer Hand. Der Hebelarm kann außerdem als Haken zum Einhängen des Reifenfüllgeräts dienen.

Eine weitere vorteilhafte Ausgestaltung der Erfindung besteht darin, daß die Patronenhülse druckdicht mit dem Füllkopf verbindbar ist und daß am Hülsenboden der Patronenhülse eine Anschlußverschraubung für den Anschluß eines zusätzlichen Druckluftbehälters ausgebildet ist, in der die Entlüftungsbohrung mündet. Hierdurch kann über die Entlüftungsbohrung der Patronenhülse ein Druckluftbehälter größerer Abmessung an das Reifenfüllgerät angeschlossen werden, der sich beispielsweise an einer Tankstelle füllen läßt und der im Hausgebrauch an Stelle einer Druckgaspatrone verwendet werden kann. Der Druckgasbehälter kann mit einem eigenen Füllventil versehen sein,das durch die Anschlußverschraubung aufstoßbar ist. Es besteht andererseits aber auch die Möglichkeit, den Druckgasbehälter über das Reifenfüllgerät zu füllen, indem die Druckluftquelle an die Auslaßöffnung des Reifenfüllgeräts angeschlossen und gleichzeitig das Ventil des Reifenfüllgeräts betätigt wird.

Weitere Vorteile und Einzelheiten der Erfindung ergeben sich aus der nachfolgenden Beschreibung eines bevorzugten Ausführungsbeispiels, das in der Zeichnung dargestellt ist. Es zeigen

Fig. 1 einen Längsschnitt durch ein erfindungsgemäßes Reifenfüllgerät im geöffneten Zustand und

Fig. 2 eine vergrößerte Darstellung des im Füllkopf des Reifenfüllgeräts gemäß Fig. 1 angeordneten Reifenfüllventils.

Das dargestellte Reifenfüllgerät besteht aus einem Füllkopf 1 von zylindrischer Grundform und einer ebenfalls zylindrischen Patronenhülse 2, in der sich eine flaschenförmige Druckgaspatrone 3 befindet. Der Füllkopf 1 und die Patronenhülse 2 haben etwa gleichen Außendurchmesser. Das eine Ende des Füllkopfes 1 ist mit einem im Durchmesser kleineren Außengewinde 4 versehen, auf das das mit einem Innengewinde 5 versehene offene Ende der Patronenhülse 2 aufschraubbar ist. An der Stufenfläche, mit der das Außengewinde 4 in die Mantelfläche des Füllkopfes 1 übergeht,befindet sich ein Dichtring 6, der mit der Dichtfläche 7 am offenen Ende der Patronenhülse zusammenwirkt und beim vollständigen Zusammenschrauben die Patronenhülse 2 gegenüber dem Füllkopf 1 druckdicht abdichtet.

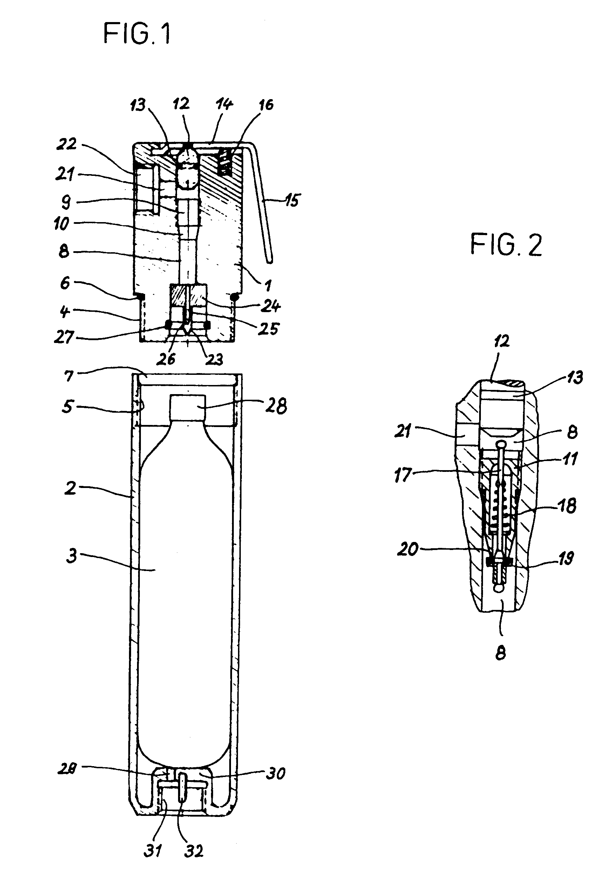

Der Füllkopf 1 ist mit einer zentralen Durchgangsbohrung 8 versehen, die in ihrem mittleren Bereich einen Gewindeabschnitt 9 und eine kegelige Dichtfläche 10 aufweist. Gewindeabschnitt 9 und Dichtfläche 10 dienen zur Aufnahme eines Reifenfüllventils 11, das wie in Fig. 2 gezeigt, von oben in die Durchgangsbohrung 8 einschraubbar ist. Über dem Reifenfüllventil 11 ist die Durchgangsbohrung 8 durch einen verschiebbaren Stößel 12 verschlossen, der mit einem Dichtring 13 gegenüber der Durchgangsbohrung 8 abgedichtet ist. Der Stößel 12 steht mit einem an der Stirnseite des Füllkopfes 1 gelagerten Betätigungshebel 14 in Wirkeingriff. Der Betätigungshebel 14 weist einen abgeknickten Hebelarm 15 auf, der sich annähernd parallel zur Längsachse des Füllkopfes 1 erstreckt. Der Betätigungshebel 14 ist gegen eine Druckfeder 16 bewegbar, durch die er in seiner Ruhelage gehalten wird. Der Stößel 12 ist durch eine Betätigung des Betätigungshebels 14 so weit in die Durchgangsbohrung 8 hineindrückbar, daß er die Ventilnadel 17 des Reifenfüllventils 11 gegen die Kraft der Ventilfeder 18 verschiebt und dadurch den Ventilteller 19 von dem Ventilsitz 20 abhebt.

Zwischen dem Reifenfüllventil 11 und Stößel 12 zweigt von der Durchgangsbohrung 8 eine Querbohrung 21 ab, die zu einem Gewindeanschluß 22 führt, in die ein Anschlußstutzen oder Verbindungsschlauch einschraubbar ist, durch die die Querbohrung 21 an das Ventil eines Reifens anschließbar ist.

Das der patronenhülse 2 zugewandte Ende der Durchgangsbohrung ist stufenförmig erweitert und enthält einen Hohldorn 23 mit einem zylindrischen Fuß 24, der sich an der Stufenfläche abstützt. Der Hohldorn 23 weist eine von seinem Fußende her bis in die Spitze führende Zentralbohrung 25 auf, die in eine Querbohrung 26 mündet. In der Nähe der Spitze des Hohldorns 23 ist in einer in die Durchgangsbohrung 8 eingestochenen Ringnut ein Dichtring 27 angeordnet, der beim Ineinanderschrauben von Füllkopf 1 und Patronenhülse 2 den in die Durchgangsbohrung 8 eindringenden Hals 28 der Druckgaspatrone 3 druckdicht umschließt, bevor der Holdorn 23 die Druckgaspatrone 3 aufgestochen hat. Das dem Füllkopf 1 abgewandte Ende der Patronenhülse 2 weist eine Entlüftungsbohrung 29 auf, die den Innenraum der Patronenhülse 2 mit der Atmosphäre verbindet. Die Entlüftungsbohrung 29 befindet sich innerhalb einer Einsenkung 30 im Hülsenboden, die mit einem Innengewinde 31 und einem Stößel 32 versehen ist. In die Einsenkung kann der mit einem Außengewinde versehene Anschlußstutzen eines Druckluftbehälters druckdicht eingeschraubt werden, wobei der Stößel 32 das Füllventil des Druckluftbehälters offenhält. Das Reifenfüllgerät kann somit auch durch einen beispielsweise an einer Tankstelle auffüllbaren Druckluftbehälter gespeist werden, dessen Volumen ein Vielfaches der dargestellten Druckgaspatrone beträgt und der eine preisgünstige stationäre Nutzung des Reifenfüllgeräts ermöglicht.

Die Zeichnung zeigt das Reifenfüllgerät in geöffnetem Zustand, in dem die Druckgaspatrone 3 eingesetzt oder ausgewechselt werden kann. Zum anschließenden Gebrauch wird die Patronenhülse 2 mit ihrem Innengewinde 5 auf das Außengewinde 4 des Füllkopfs 1 geschraubt. Hierbei wird der Hals 28 in den erweiterten Abschnitt der Durchgangsbohrung 8 geschoben, wobei er über den Dichtring 27 gleitet. Der Hohldorn 23 dringt in die Stirnwand der Druckgaspatrone ein und durchdringt sie so weit, daß sich in der Endstellung die Querbohrung 26 im Innern der Druckgaspatrone 3 befindet. Die Druckgaspatrone 3 ist nun druckdicht an die Eingangsseite der Durchgangsbohrung 8 angeschlossen.

Zum Aufpumpen eines Reifens wird der Füllkopf 1 über den Gewindeanschluß 22, wie oben angegeben, mit dem Reifenventil verbunden. Durch Betätigen des Betätigungshebels 14 wird daraufhin das Reifenfüllventil 11 geöffnet, wodurch das Gas aus der Druckgaspatrone 3 über die Querbohrung 26 die Zentralbohrung 25, das Reifenfüllventil 11 und die Querbohrung 21 über das Reifenventil in den Reifen gelangt. Der Betätigungshebel 14 wird nun so lange betätigt, bis der gewünschte Druck im Reifen erzielt ist. Da der Druck im mittleren Teil der Durchgangsbohrung 8 und in der Querbohrung 21, der dem jeweiligen Reifenfülldruck entspricht, den Stößel 12 beaufschlagt, nimmt die Betätigungskraft am Betätigungshebel 14 mit steigendem Fülldruck zu, so daß sich auf diese Weise der Druckanstieg im Reifen gut verfolgen und dosieren läßt.

Ist nach einem oder mehreren Füllvorgängen die Druckgaspatrone 3 geleert, so werden der Füllkopf 1 und die Patronenhülse 2 wieder auseinandergeschraubt und die leere Druckgaspatrone durch eine neue ersetzt. Um beim Auseinanderschrauben sicherzu stellen, daß die Druckgaspatrone 3 aus der Durchgangsbohrung 8 herausgezogen wird und auf diese Weise sicher zu erreichen, daß sich die Druckgaspatrone 3 vor dem Trennen von Füllkopf 1 und Patronenhülse 2 vollständig entleert, ist in der Patronenhülse 2 eine leicht lösbare Haltevorrichtung angeordnet, durch die die Druckgaspatrone 3 in axialer Richtung in der Patronenhülse 2 fixiert ist. An Stelle einer Haltevorrichtung kann auch eine Druckfeder vorgesehen sein, die sich an der Druckgaspatrone 3 und dem Füllkopf 1 abstützt.

**Patentansprüche**

1.  Reifenfüllgerät, insbesondere zum Füllen von Fahrradreifen, bestehend aus einem Füllkopf (1) mit einer an das Reifenventil anschließbaren Auslaßöffnung (21) und einer Einlaßöffnung für eine Druckgaspatrone (3) und aus einer konzentrisch zur Einlaßöffnung mit dem Füllkopf (1) verbindbaren Patronenhülse (2) zur Aufnahme der Druckgaspatrone (3), wobei der Verbindungskanal (8) zwischen der Einlaßöffnung und der Auslaßöffnung (21) des Füllkopfes (1) ein Ventil (11) enthält, das in seiner Schließstellung den Verbindungskanal (8) sperrt und das über eine am Füllkopf (1) angeordnete Betätigungsvorrichtung (12, 14) in seine Offenstellung bewegbar ist, **dadurch gekennzeichnet**, daß

    i) die Einlaßöffnung einen Hohldorn (23) enthält, wobei das Ende des Verbindungskanals (8) zur Aufnahme des Hohldorns (23) und des Halses (28) der Druckgaspatrone (3) erweitert ist, daß

    ii) das Ventil (11) selbsttätig schließend ist, und daß

    iii) die Patronenhülse (7) eine Entlüftungsbohrung (29) aufweist, durch die ihr Innenraum mit der Atmosphäre verbunden ist.

2.  Reifenfüllgerät nach Anspruch 1, dadurch gekennzeichnet, daß die Patronenhülse (2) eine Halterung aufweist, durch die die Druckgaspatrone in der Patronenhülse (2) arretierbar ist.

3.  Reifenfüllgerät nach einem der Ansprüche 1 oder 2, dadurch gekennzeichnet, daß das Ventil (11) ein von außen in den Verbindungskanal (8) einschraubbares Reifenfüllventil ist, das durch einen, die Einschrauböffnung druckdicht verschließenden Stößel (12) von außen betätigbar ist.

4.  Reifenfüllgerät nach Anspruch 1 oder 2, dadurch gekennzeichnet, daß der Füllkopf (1) aus einem zylindrischen Gehäuse mit einer zentralen, gestuften Durchgangsbohrung (8) besteht, daß der Mittelabschnitt der Durchgangsbohrung (8) einen Dichtkegel (10) und ein Innengewinde (9) zur Aufnahme eines Reifenfüllventils (11) aufweist, daß ein Ende der Durchgangsbohrung (8) zur Aufnahme des Hohldornes (23) und des Halses (28) der Druckgaspatrone (3) erweitert ist und daß das andere Ende der Durchgangsbohrung (8) einen Stößel (12) aufnimmt.

5. Reifenfüllgerät nach Anspruch 4, dadurch gekennzeichnet, daß das den Hohldorn (23) aufnehmende, erweiterte Ende der Durchgangsbohrung (8) in einer eingestochenen Ringnut einen Dichtring (27) enthält, in den der Hals (28) der Druckgaspatrone (3) vor dem Aufstechen durch den Hohldorn (23) eingreift.

6. Reifenfüllgerät nach Ansprüche, 4 oder 5 dadurch gekennzeichnet, daß von der Durchgangsbohrung (8) zwischen dem Ventil (11) und dem Stößel (12) eine Querbohrung (21) abzweigt, die an ihrem äußeren Ende eine die Auslaßöffnung enthaltende Anschlußverschraubung aufweist.

7. Reifenfüllgerät nach Ansprüche, 3 bis 6 dadurch gekennzeichnet, daß der Stößel (12) durch einen Hebel (14) betätigbar ist, der an der Stirnseite des Füllkopfes (1) gelagert ist und einen sich auf der der Auslaßöffnung (21) abgekehrten Seite längs der zylindrischen Außenfläche des Füllkopfes (1) erstreckenden Hebelarm (15) aufweist.

8. Reifenfüllgerät nach einem vorhergehenden Anspruch, dadurch gekennzeichnet, daß die Patronenhülse (2) druckdicht mit dem Füllkopf (1) verbindbar ist und daß am Hülsenboden (30) der Patronenhülse (2) eine Anschlußverschraubung (31, 32) für den Anschluß eines zusätzlichen Druckluftbehälters ausgebildet ist, in der die Entlüftungsbohrung (29) mündet.

**Claims**

1. Tire inflating device, particularly for inflating bicycle tires, consisting of an inflating head (1) with an outlet (21) connectable to the inflation valve of a bicycle tire and an inlet for a high pressure gas cartrigde (3), and of a cartridge jacket (2) attachable with the inflating head (1) concentric to the inlet for receiving a high pressure gas cartridge (3), whereby the connecting duct (8) between the inlet and the outlet (21) of the inflating head contains a valve (11) that locks the connecting duct (8) in its closed position, and that can be moved to its open position by means of an operating device attached to the inflating head (12, 14), characterized in that
   i) the inlet contains a hollow spike (23), while the end of the connecting duct (8) is widened in order to receive the hollow spike (23) and the neck (28) of the high pressure gas cartridge (3), in that
   ii) the valve (11) closes automatically, and in that
   iii) the cartridge jacket (7) comprises a vent bore (29), by which its interior is connected to the atmosphere.

2. Tire inflating device according to claim 1, characterized in that the cartridge jacket (2) comprises a support, by which the high pressure gas cartrigde is retainable in the cartridge jacket (2).

3. Tire inflating device according to either claim 1 or 2, characterized in that the valve (11) is a tire inflating valve screwable into the connecting duct (8) from the outside which is operable from the outside by a tappet (12) hermetically sealing the threaded opening under pressure.

4. Tire inflating device according to either claim 1 or 2, characterized in that the inflating head (1) consists of a central cylindrical housing with a central, stepped passage bore (8), in that the midsection of the passage bore (8) comprises a sealing cone (10) and an interior thread (9) for receiving a tire inflating valve (11), in that one end of the passage bore (8) is widened in order to receive the hollow spike (23) and the neck (28) of the high pressure gas cartridge (3), and in that the other end of the passage bore (8) accepts a tappet (12).

5. Tire inflating device according to claim 4, characterized in that the widened end of the passage bore (8) receiving the hollow spike (23) contains a sealing ring in a circular recessed groove, on which the neck (28) of the high pressure gas cartridge (3) fits before the hollow spike (23) pierces the high pressure gas cartridge (3).

6. Tire inflating device according to claim 4 or 5, characterized in that a transverse bore (21) branches off from the passage bore (8) between the valve (11) and the tappet (12), which has a connecting thread containing the outlet at its outer end.

7. Tire inflating device according to claims 3 to 6, characterized in that the tappet (12) is operable by a lever (14) mounted on the front end of the inflating head (1), and having a lever arm (15) extending along the cylindrical exterior surface of the inflating head (1) on the end opposite the outlet (21).

8. Tire inflating device according to an aforementioned claim, characterized in that the cartridge jacket (2) is connectable to the inflating head (1) in a pressure tight manner, and in that a connector thread (31, 32) for connecting an additional high pressure air container is formed on the jacket base (30) of the cartridge jacket (2) into which connector thread opens the vent bore (29).

**Revendications**

1. Dispositif de gonflage de pneumatiques, destiné en particulier au gonflage de pneumatiques de bicyclettes, composé d'une tête de gonflage (1), pourvue d'un orifice de sortie (21) qui peut être raccordée à la valve de pneumatique et d'un orifice d'introduction destiné à une cartouche (3) de gaz comprimé, et d'une douille (2) de cartouche qui peut être reliée, de manière concentrique à l'orifice d'entrée, à la tête de gonflage (1) pour recevoir la cartouche (3) de gaz comprimé, le canal de liaison (8) entre l'orifice d'entrée et l'orifice de sortie (21) de la tête de gonflage (1) contenant une valve (11) qui, dans sa position de fermeture, bloque le canal de liaison (8) et qui est mobile vers sa position ouverte au moyen d'un dispositif d'actionnement (12, 14) disposé sur la tête de gonflage (1), caractérisé en ce que
   i) l'orifice d'entrée comporte un mandrin creux (23), l'extrémité du canal de liaison (8) étant élargie pour recevoir le mandrin creux (23) et le col (28) de la cartouche (3) de gaz comprimé, en ce que
   ii) la valve (11) se ferme automatiquement, et en ce que
   iii) la douille (7) de cartouche comporte un alésage de mise à l'atmosphère (29) au moyen duquel son espace intérieur est relié à l'atmosphère.

2. Dispositif de gonflage de pneumatiques selon la revendication 1, caractérisé en ce que la douille (2) de cartouche comporte un support au moyen duquel la douille de cartouche peut être arrêtée dans la douille (2) de cartouche.

3. Dispositif de gonflage de pneumatiques selon l'une des revendications 1 ou 2, caractérisé en ce que la valve (11) est une valve de gonflage de pneumatiques insérable de l'extérieur par vissage dans le canal de liaison (8),qui peut être actionné de l'extérieur au moyen d'un poussoir (12) qui ferme de façon étanche à l'air l'orifice fileté d'insertion.

4. Dispositif de gonflage de pneumatiques selon l'une des revendications 1 ou 2, caractérisé en ce que la tête de gonflage (1) se compose d'un boîtier cylindrique comportant un alésage traversant central (8) à gradins , en ce que la partie médiane de l'alésage traversant (8) comporte une bille d'étanchéité (10) et un filetage intérieur (9) pour recevoir une valve (11) de gonflage de pneumatiques, en ce qu'une extrémité de l'alésage traversant (8) est élargie pour recevoir le manchon creux (23) et le col (28) de la cartouche (3) de gaz comprimé et en ce que l'autre extrémité de l'alésage traversant (8) reçoit un poussoir (12).

5. Dispositif de gonflage selon la revendication 4, caractérisé en ce que l'extrémité élargie, recevant le manchon creux (23), de l'alésage traversant (8) contient dans une rainure annulaire qui y est ménagée une bague d'étanchéité (27) dans laquelle pénètre le col (28) de la cartouche (3) de gaz comprimé avant d'être introduit à travers le manchon creux (23).

6. Dispositif de gonflage de pneumatiques selon l'une des revendications 4 ou 5, caractérisé en ce qu'un alésage transversal (21), qui comporte à son extrémité extérieure une filetage de raccordement contenant l'orifice de sortie, se ramifie à partir de l'orifice traversant (8) entre la valve (11) et le poussoir (12).

7. Dispositif de gonflage de pneumatiques selon l'une des revendications 3 à 6, caractérisé en ce que le poussoir (12) peut être actionné à l'aide d'un levier (14) qui est logé sur la face frontale de la tête de gonflage (1) et comporte un bras de levier (15) qui s'étend sur le côté opposé à l'orifice de sortie (21) le long de la surface extérieure cylindrique de la tête de gonflage (1).

8. Dispositif de gonflage de pneumatiques selon une revendication précédente, caractérisé en ce que la douille (2) de cartouche peut être reliée de façon étanche à la pression à la tête de gonflage (1) et en ce qu'un filetage de raccordement (31, 32), qui est destiné à raccorder un réservoir d'air sous pression additionnel et dans lequel débouche l'alésage de mise à l'atmosphère (29), est réalisé sur le fond (30) de douille de la douille (2) de cartouche.

FIG.1

FIG. 2